# EUROPÄISCHE PATENTSCHRIFT

(11) **EP 4 145 098 B1**
(45) Veröffentlichungstag und Bekanntmachung des Hinweises auf die Patenterteilung: **21.08.2024**
(21) Anmeldenummer: 22193036.5
(22) Anmeldetag: 31.08.2022
(51) Int. Cl.: G01L 1/02, G01L 1/04, B60G 11/27, B60G 17/018, B60G 17/019

(54) **VORRICHTUNG ZUR KRAFTERMITTLUNG**
FORCE DETECTING DEVICE
DISPOSITIF DE DÉTERMINATION DE FORCE

(30) Priorität: 07.09.2021 DE 102021209854
(43) Veröffentlichungstag der Anmeldung: 08.03.2023
(73) Patentinhaber: ContiTech Deutschland GmbH, 30175 Hannover (DE)
(72) Erfinder: Mosich, Manuel, 30165 Hannover (DE); Stöter, Bernd, 30165 Hannover (DE)
(74) Vertreter: Continental Corporation

(56) Entgegenhaltungen:
- DE-A1- 102005 028 501
- DE-B3- 102019 205 426
- US-A1- 2002 038 193

## Beschreibung

Die Erfindung betrifft eine Vorrichtung zur Ermittlung der von einer Luftfeder übertragenen Kraft gemäß dem Oberbegriff des Anspruchs 1.

### Stand der Technik

Aus dem Stand der Technik sind verschiedene Lösungen zur Ermittlung der von einer Luftfeder übertragenen Kraft bekannt.

Die US 2019/381853 A1 offenbart eine Luftfeder in Kombination mit einem Piezo-Sensor zur Gewichtsmessung eines Trailers. Es erweist sich hierbei als nachteilig, dass die Sensorinstallation außerhalb des vor Umgebungseinflüssen geschützten Innenvolumens der Luftfeder angeordnet ist und eventuelle Beschädigungen an dem Sensor und der Verkabelung leicht hervorgerufen werden können. Außerdem ist es für den Endanwender sehr aufwendig, die generierten Messwerte der Luftfederhöhe und des Luftfederinnendrucks in einem Berechnungsprogramm zusammenzuführen und diese Messwerte mit einem spezifischen Kennlinienfeld der individuell eingesetzten Luftfeder zu verknüpfen.

Die Verwendung im industriellen Maschinenbau erfordert zudem eine maschinenspezifische Anpassung des Berechnungsprogramms an die Programmiersprache der eingesetzten Maschinensteuerung.

Die DE 100 29 332 A1 betrifft eine Vorrichtung zur Messung der von einer Luftfeder übertragenen Kraft. Die Kraftermittlung erfolgt über die mittels der Vorrichtung erfassten Sensorwerte des Balgdruckes sowie des Einfederweges. Auf einer Rechenvorrichtung ist eine Funktion hinterlegt, welche die wirksame Luftfeder-Querschnittsfläche in Abhängigkeit vom Einfederweg der Luftfeder beschreibt.

Nachteiliger Weise ermöglicht die Funktion nur eine näherungsweise Ermittlung der Luftfeder-Querschnittsfläche, weshalb die Ermittlung der Kraft einer entsprechenden Ungenauigkeit unterliegt.

Weiterhin sind Vorrichtungen zur Ermittlung der von einer Luftfeder übertragenen Kraft aus US 2002/038193 A1 und DE 10 2019 205426 B3 bekannt.

### Aufgabe

Der Erfindung liegt daher die Aufgabe zugrunde, eine Vorrichtung zur Ermittlung der von einer Luftfeder übertragenen Kraft bereitzustellen, welche gegenüber dem Stand der Technik eine genauere Kraftermittlung erlaubt und darüber hinaus keine kundenspezifische Implementierung eines Berechnungsprogramms zur Kraftberechnung auf der jeweiligen Maschinensteuerung erfordert.

### Lösung der Aufgabe

Die Lösung dieser Aufgabe ergibt sich durch eine Vorrichtung zur Ermittlung der von einer Luftfeder übertragenen Kraft mit den Merkmalen des Hauptanspruchs. Anspruch 8 offenbart eine Luftfeder mit einer erfindungsgemäßen Vorrichtung. Anspruch 9 offenbart eine Maschine mit einer erfindungsgemäßen Luftfeder.

Anspruch 10 offenbart ein Kraftfahrzeug mit wenigstens einer erfindungsgemäßen Luftfeder. Weitere vorteilhafte Ausbildungen sind in den abhängigen Ansprüchen offenbart.

### Vorteile der Erfindung

Anspruch 1 offenbart eine erfindungsgemäße Vorrichtung zur Ermittlung der von einer Luftfeder übertragenen Kraft, wobei innerhalb oder außerhalb der Luftfeder ein erster Sensor zur Erfassung des jeweiligen Balgdruckes angeordnet ist. Innerhalb oder außerhalb der Luftfeder ist ein zweiter Sensor zur Erfassung des Einfederweges angeordnet, wobei die Vorrichtung eine elektronische Rechenvorrichtung umfasst, welche ausgebildet ist, die beiden Daten über den Balgdruck und den Einfederweg zu erhalten. Die Lösung der gestellten Aufgabe ergibt sich dadurch, dass auf der elektronischen Rechenvorrichtung ein Kennlinienfeld der Luftfeder hinterlegt ist, welches die Kraft in Abhängigkeit vom Einfederweg und dem Balgdruck beschreibt, wobei die Vorrichtung ferner ausgebildet ist, aus dem Balgdruck und dem Einfederweg die von der Luftfeder übertragene Kraft zu bestimmen.

Ein wesentliches Element dieser Lösung ist die Anordnung eines ersten Sensors zur Erfassung des Balgdruckes und eines zweiten Sensors zur Erfassung des Einfederweges an jeder verwendeten Luftfedern. Der Druck und der Federweg in den Luftfedern wird von einer elektronischen Rechenvorrichtung, nachfolgend im Jargon der Fachleute auch "ECU" (für Electronic Control Unit) genannt, weiterverarbeitet.

Der Zusammenhang zwischen Druck und auftretender Kraft in der Luftfeder ist zwar in der Regel streng monoton aber nicht linear, weil die Fläche, auf die der Druck wirkt, konstruktiv bedingt in Abhängigkeit von der Einfederung schwankt. Dennoch ermöglicht die Erfindung nach der Messung des Druckes und des Einfederweges aus diesen Daten auf die wirkende Federkraft zu schließen.

Dazu muss aber zunächst ein parametrisches Gleichungssystem, repräsentiert durch die Kennlinie der Luftfeder, ermittelt und in der ECU hinterlegt werden, das für den bestimmten Federtyp analog einer Eichkurve die Kraft in Abhängigkeit vom Einfederweg und dem Balgdruck beschreibt. Wird nach dieser Vorbereitung der Einfederweg in die ECU eingegeben, dann kann zusammen mit dem weiterhin eingegebenen Druck die von der Luftfeder übertragene Kraft bestimmt werden.

Durch die erfindungsgemäße Vorrichtung kann eine Lastermittlung mit Hilfe von Druck und Höhenmesswerten erfolgen, ohne dass zusätzliche Kraft- oder Wiegesensoren notwendig sind. Weiterhin kann gegenüber dem Stand der Technik auf eine nur näherungsweise mögliche Ermittlung der wirksamen Querschnittsfläche der Luftfeder verzichtet werden. Da das Kennlinienfeld der Luftfeder zwischen verschiedenen Luftfedern, bedingt durch deren konstruktive Gestaltung, variieren kann, wird für eine besonders vorteilhafte präzise Ermittlung der Kraft durch die erfindungsgemäße Vorrichtung das Kennlinienfeld der jeweiligen Luftfeder individuell durch den Hersteller der Luftfeder messtechnisch ermittelt und auf der elektronischen Rechenvorrichtung der jeweiligen Vorrichtung hinterlegt.

Durch die Lastermittlung kann Gefahren durch Überladungen von Maschinen oder Fahrzeugen vorgebeugt werden. Weiterhin ist ein last- oder kraftgeregelter Betrieb von Luftfedern möglich, wie es beispielsweise bei aktiven Pneumatikzylindern der Fall sein kann.

Gemäß einem weiteren Aspekt der erfindungsgemäßen Vorrichtung bilden die Sensoren und die elektronische Rechenvorrichtung eine Sensoreinheit. Der Begriff Sensoreinheit ist hierbei nicht funktionell im Sinne des Zusammenwirkens der einzelnen Komponenten zu verstehen, sondern strukturell, indem die Sensoren zur Erfassung des Balgdruckes und des Einfederweges sowie die elektronische Rechenvorrichtung, die durch einen Mikrocontroller gebildet sein kann, konstruktiv als eine Bauteilgruppe bildende Einheit vorliegen. Durch Bereitstellen der beiden Sensoren und der Rechenvorrichtung als Bauteilgruppe der erfindungsgemäßen Vorrichtung können für Endanwender nicht-zugängliche Angaben durch den Hersteller der erfindungsgemäßen Vorrichtung auf der Rechenvorrichtung der erfindungsgemäßen Bauteilgruppe hinterlegt sein, die zur Berechnung der Kraft aus dem Einfederweg und dem Balgdruck erforderlich sind. Die Kraftberechnung kann auf diese Weise über die bereitgestellte erfindungsgemäße Vorrichtung erfolgen, sodass der Endanwender lediglich eine passende Schnittstelle zum Abrufen des errechneten Kraftwertes bereitstellen muss. Die Implementierung eines individuellen Berechnungsprogrammes zur Auswertung der Sensorsignale durch den Endanwender kann durch die erfindungsgemäße Lösung auf vorteilhafte Weise entfallen, so dass der Endanwender der erfindungsgemäßen Vorrichtung hiervon entlastet werden kann. Auch können die bereits erwähnten nicht-zugänglichen Angaben, welche das Know-How des Herstellers der erfindungsgemäßen Vorrichtung bzw. Luftfeder betreffen können, auf diese Art und Weise vor dem Endanwender verborgen und somit zugunsten des Herstellers geschützt werden, ohne dass die Berechnung bzw. Bereitstellung der Kraft hierzu beeinflusst bzw. beeinträchtigt wird.

Gemäß einem weiteren Aspekt der erfindungsgemäßen Vorrichtung ist die Sensoreinheit ausgebildet, als Ausgangsgrößen die ermittelte Kraft und bzw. oder den Einfederweg und bzw. oder den Balginnendruck auszugeben. Auf besonders vorteilhafte Weise ermöglicht die Vorrichtung dem Endanwender bei Bedarf, auf alle ermittelten Messwerte zugreifen zu können und diese für ggfs. weitere Auswertungen zu verwenden.

Gemäß einem weiteren Aspekt der erfindungsgemäßen Vorrichtung ist der Balgdruck durch den ersten Sensor innerhalb der Luftfeder messbar. Mit anderen Worten kann auf diese Art und Weise der erste Sensor innerhalb des Innenvolumens des Balges angeordnet werden. Hierdurch ergibt sich auf vorteilhafte Weise ein äußerst kompakter Aufbau, sodass die Luftfeder in ihren äußeren Abmessungen unverändert bleibt. Das ist besonders von Vorteil, wenn eine konventionelle Luftfeder gegen eine Luftfeder mit der erfindungsgemäßen Vorrichtung getauscht werden soll. Auch kann der erste Sensor hierdurch vor äußeren Einflüssen wie beispielsweise Flüssigkeiten, Schmutz und dergleichen sowie vor Kontakt mit Gegenständen bzw. vor Berührung durch Personen geschützt werden.

Gemäß einem weiteren Aspekt der erfindungsgemäßen Vorrichtung ist der Balgdruck durch den ersten Sensor innerhalb einer die Luftfeder mit Druckluft versorgenden Druckluftleitung messbar. Mit anderen Worten kann auf diese Art und Weise der erste Sensor innerhalb des Innenvolumens der Druckluftleitung angeordnet werden. Dies kann vorteilhaft sein, da das für die Luft zur Verfügung stehende Innenvolumen der Luftfeder durch die Anordnung des ersten Sensors nicht beeinflusst wird. Auch kann der erste Sensor hierdurch vor äußeren Einflüssen wie beispielsweise Flüssigkeiten, Schmutz und dergleichen sowie vor Kontakt mit Gegenständen bzw. vor Berührung durch Personen geschützt werden.

Gemäß einem weiteren Aspekt der erfindungsgemäßen Vorrichtung ist der zweite Sensor zur Erfassung des Einfederweges als ein Winkelsensor ausgebildet. Winkelsensoren sind in vielen verschiedenen Ausführungsformen kommerziell erhältlich, weshalb dies eine kostengünstige Möglichkeit zur Lösung der gestellten Aufgabe darstellt.

Gemäß einem weiteren Aspekt der erfindungsgemäßen Vorrichtung ist in der elektronischen Rechenvorrichtung eine mathematische Funktion hinterlegt, welche eine Änderung des Kennlinienfeldes der Luftfeder durch alterungsbedingte und bzw. oder beanspruchungsbedingte Dehnung und bzw. oder Setzung der Luftfeder berücksichtigt. Hierdurch kann auf besonders vorteilhafte Weise eine alterungsbedingte Abweichung der ermittelten Kraft vermieden werden.

Gemäß einem weiteren Aspekt der erfindungsgemäßen Vorrichtung umfasst die Sensoreinheit einen Temperatursensor, wobei in der elektronischen Rechenvorrichtung eine mathematische Funktion hinterlegt ist, welche eine Änderung des Kennlinienfeldes der Luftfeder durch Temperatureinflüsse berücksichtigt. Hierdurch kann auf besonders vorteilhafte Weise eine temperaturbedingte Abweichung der ermittelten Kraft vermieden werden.

Die vorliegende Erfindung betrifft auch eine Luftfeder mit einer erfindungsgemäßen Vorrichtung wie zuvor beschrieben. Hierdurch lassen sich die eingangs beschriebenen Eigenschaften und Vorteile der erfindungsgemäßen Vorrichtung auf eine Luftfeder übertragen und dort nutzen.

Die vorliegende Erfindung betrifft auch eine Maschine mit einer erfindungsgemäßen Luftfeder wie zuvor beschrieben. Hierdurch lassen sich die eingangs beschriebenen Eigenschaften und Vorteile der erfindungsgemäßen Luftfeder auf eine Maschine übertragen und dort nutzen.

Die vorliegende Erfindung betrifft auch ein Kraftfahrzeug mit wenigstens einer erfindungsgemäßen Luftfeder wie zuvor beschrieben. Hierdurch lassen sich die eingangs beschriebenen Eigenschaften und Vorteile der erfindungsgemäßen Luftfeder auf eine Kraftfahrzeuganwendung übertragen und dort nutzen.

### Erläuterung Figuren

Anhand der Figuren wird im Folgenden ein Ausführungsbeispiel der Erfindung schematisch dargestellt und näher erläutert.
Figur 1 zeigt eine erfindungsgemäße Luftfeder.
Figur 2 zeigt eine erfindungsgemäße Vorrichtung mit der Verwendung von mehreren erfindungsgemäßen Luftfedern.
Figur 3 zeigt das in der elektronischen Rechenvorrichtung hinterlegte Kennlinienfeld 6 der erfindungsgemäßen Luftfeder.

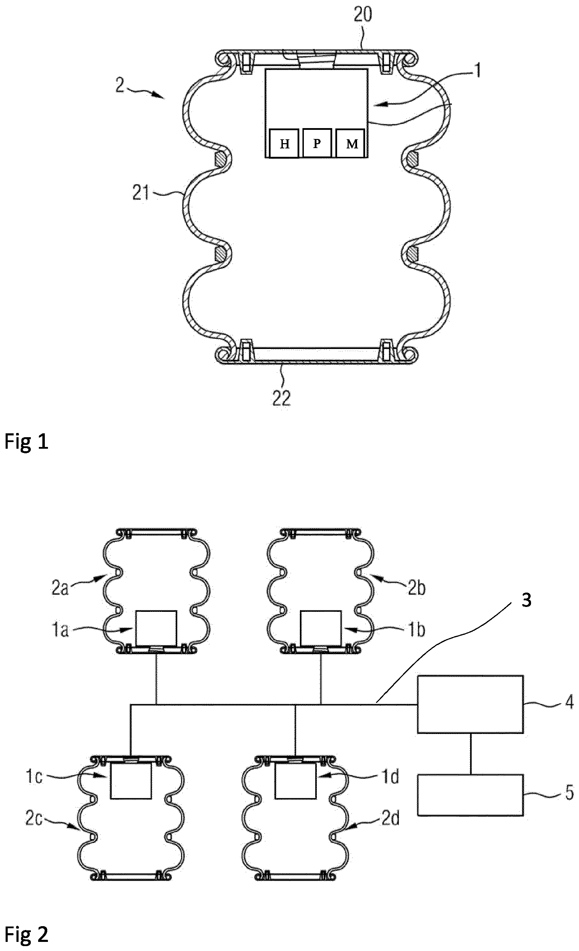

Figur 1 zeigt eine erfindungsgemäße Luftfeder 2, umfassend eine erste Anschlussplatte 20, einen flexiblen Balg 21 und eine zweite Anschlussplatte 22. Innerhalb der Luftfeder 2 ist eine Sensoreinheit 1 integriert. Die Sensoreinheit 1 umfasst Sensoren für den Einfederweg HL und den Balgdruck PL, sowie eine elektronische Rechenvorrichtung M in Form eines Microcontrollers M.

In Figur 2 ist eine erfindungsgemäße Vorrichtung dargestellt, welche vier Luftfedern 2a, 2b, 2c, 2d mit jeweils einer integrierten Sensoreinheit 1a, 1b, 1c, 1d aufweist. Die Vorrichtung umfasst eine Steuerungseinheit 4 und ein Ausgabegerät 5, beispielsweise ein Display 5. Die vier Luftfedern 2a, 2b, 2c, 2d sind über eine Leitung 3 mit der elektronischen Rechenvorrichtung 4 verbunden.

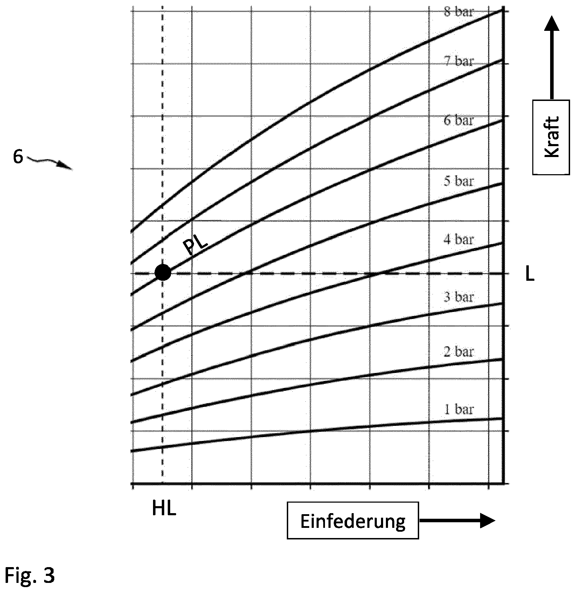

Figur 3 zeigt das Kennlinienfeld 6 einer Luftfeder, welches als parametrische Gleichung in der elektronischen Rechenvorrichtung M gespeichert ist. Mittels der Sensorwerte Höhe HL sowie Druck PL kann die Kraft/Last L der Luftfeder ermittelt werden.

### Bezugszeichenliste (Teil der Beschreibung)

### Sensoreinheit

- 1: Sensoreinheit
- 1a: Sensoreinheit
- 1b: Sensoreinheit
- 1c: Sensoreinheit
- 1d: Sensoreinheit
- 2: Luftfeder
- 2a: Luftfeder
- 2b: Luftfeder
- 2c: Luftfeder
- 2d: Luftfeder
- 3: Leitung
- 4: Steuerungseinheit
- 5: Ausgabegerät; Display
- 6: Kennlinienfeld einer Luftfeder
- 20: erste Anschlussplatte
- 21: Balg
- 22: zweite Anschlussplatte

- H: zweiter Sensor / Höhensensor
- HL: Einfederweg / Höhe
- L: Kraft / Last
- M: elektronische Rechenvorrichtung (ECU); Microcontroller
- P: erster Sensor / Drucksensor
- PL: Balgdruck

## Patentansprüche

1. Vorrichtung zur Ermittlung der von einer Luftfeder (2, 2a, 2b, 2c, 2d) übertragenen Kraft (L), wobei innerhalb oder außerhalb der Luftfeder (2, 2a, 2b, 2c, 2d) ein erster Sensor (P) zur Erfassung des jeweiligen Balgdruckes (PL) angeordnet ist,
wobei innerhalb oder außerhalb der Luftfeder (2, 2a, 2b, 2c, 2d) ein zweiter Sensor (H) zur Erfassung des Einfederweges (HL) angeordnet ist, wobei die Vorrichtung eine elektronische Rechenvorrichtung (M) umfasst, welche ausgebildet ist, die beiden Daten über den Balgdruck (PL) und den Einfederweg (HL) zu erhalten, wobei
auf der elektronischen Rechenvorrichtung (M) ein Kennlinienfeld der Luftfeder hinterlegt ist, welches die Kraft (L) in Abhängigkeit vom Einfederweg (HL) und dem Balgdruck (PL) beschreibt,
wobei die Vorrichtung ausgebildet ist, in Abhängigkeit vom Einfederweg (HL) und des Balginnendrucks (PL) die übertragene Kraft (L) mit Hilfe des Kennlinienfelds der jeweiligen Luftfeder (2, 2a, 2b, 2c, 2d) zu bestimmen,
**dadurch gekennzeichnet, dass**
die Sensoreinheit (1) einen Temperatursensor umfasst,
wobei in der elektronischen Rechenvorrichtung (M) eine mathematische Funktion hinterlegt ist, welche eine Änderung des Kennlinienfeldes der Luftfeder (2, 2a, 2b, 2c, 2d) durch Temperatureinflüsse berücksichtigt.

2. Vorrichtung nach Anspruch 1,
**dadurch gekennzeichnet, dass**
die Sensoren (P, H) und die elektronische Rechenvorrichtung (M) eine Sensoreinheit (1, 1a, 1b, 1c, 1d) bilden.

3. Vorrichtung nach einem der vorhergehenden Ansprüche,
**dadurch gekennzeichnet, dass**
die Sensoreinheit (1, 1a, 1b, 1c, 1d) ausgebildet ist, als Ausgangsgrößen die ermittelte Kraft (L) und / oder den Einfederweg (HL) und / oder den Balginnendruck (PL) auszugeben.

4. Vorrichtung nach einem der vorhergehenden Ansprüche,
**dadurch gekennzeichnet, dass**
der Balgdruck (PL) durch den ersten Sensor (P) innerhalb der Luftfeder (2, 2a, 2b, 2c, 2d) messbar ist.

5. Vorrichtung nach einem der vorhergehenden Ansprüche,
**dadurch gekennzeichnet, dass**
der Balgdruck (PL) durch den ersten Sensor (P) innerhalb einer die Luftfeder (2, 2a, 2b, 2c, 2d) mit Druckluft versorgenden Druckluftleitung messbar ist.

6. Vorrichtung nach einem der vorhergehenden Ansprüche,
**dadurch gekennzeichnet, dass**
der zweite Sensor (H) zur Erfassung des Einfederweges (HL) als ein Winkelsensor ausgebildet ist.

7. Vorrichtung nach einem der vorhergehenden Ansprüche,
**dadurch gekennzeichnet, dass**
in der elektronischen Rechenvorrichtung (M) eine mathematische Funktion hinterlegt ist, welche eine Änderung des Kennlinienfeldes der Luftfeder (2, 2a, 2b, 2c, 2d) durch alterungsbedingte und/oder beanspruchungsbedingte Dehnung und/oder Setzung der Luftfeder (2, 2a, 2b, 2c, 2d) berücksichtigt.

8. Luftfeder (2, 2a, 2b, 2c, 2d) mit einer Vorrichtung nach einem der vorhergehenden Ansprüche.

9. Maschine mit einer Luftfeder nach Anspruch 8.

10. Kraftfahrzeug mit wenigstens einer Luftfeder nach Anspruch 8.

## Claims

1. Apparatus for determining the force (L) transmitted by an air spring (2, 2a, 2b, 2c, 2d), wherein a first sensor (P) for recording the respective bellows pressure (PL) is arranged inside or outside the air spring (2, 2a, 2b, 2c, 2d),
wherein a second sensor (H) for recording the compression travel (HL) is arranged inside or outside the air spring (2, 2a, 2b, 2c, 2d),
wherein the apparatus comprises an electronic computing apparatus (M) configured to receive the two items of data about the bellows pressure (PL) and the compression travel (HL), wherein
the electronic computing apparatus (M) stores a family of characteristics relating to the air spring, describing the force (L) according to the compression travel (HL) and the bellows pressure (PL),
wherein the apparatus is configured to take the compression travel (HL) and the internal bellows pressure (PL) as a basis for determining the transmitted force (L) with the aid of the family of characteristics relating to the respective air spring (2, 2a, 2b, 2c, 2d),
**characterized in that**
the sensor unit (1) comprises a temperature sensor,
wherein the electronic computing apparatus (M) stores a mathematical function that takes account of a change in the family of characteristics relating to the air spring (2, 2a, 2b, 2c, 2d) as a result of temperature influences.

2. Apparatus according to Claim 1,
**characterized in that**
the sensors (P, H) and the electronic computing apparatus (M) form a sensor unit (1, 1a, 1b, 1c, 1d).

3. Apparatus according to either of the preceding claims,
**characterized in that**
the sensor unit (1, 1a, 1b, 1c, 1d) is configured to output the determined force (L) and/or the compression travel (HL) and/or the internal bellows pressure (PL) as output variables.

4. Apparatus according to either of the preceding claims,
**characterized in that**
the bellows pressure (PL) is measurable by the first sensor (P) inside the air spring (2, 2a, 2b, 2c, 2d).

5. Apparatus according to either of the preceding claims,
**characterized in that**
the bellows pressure (PL) is measurable by the first sensor (P) inside a compressed air line supplying the air spring (2, 2a, 2b, 2c, 2d) with compressed air.

6. Apparatus according to either of the preceding claims,
**characterized in that**
the second sensor (H) for recording the compression travel (HL) is in the form of an angle sensor.

7. Apparatus according to either of the preceding claims,
**characterized in that**
the electronic computing apparatus (M) stores a mathematical function that takes account of a change in the family of characteristics relating to the air spring (2, 2a, 2b, 2c, 2d) as a result of aging-induced and/or stress-induced stretching and/or setting of the air spring (2, 2a, 2b, 2c, 2d).

8. Air spring (2, 2a, 2b, 2c, 2d) having an apparatus according to one of the preceding claims.

9. Machine having an air spring according to Claim 8.

10. Motor vehicle having at least one air spring according to Claim 8.

## Revendications

1. Dispositif de détermination de la force (L) transmise par un amortisseur pneumatique (2, 2a, 2b, 2c, 2d), un premier capteur (P) étant disposé à l'intérieur ou à l'extérieur de l'amortisseur pneumatique (2, 2a, 2b, 2c, 2d) pour détecter la pression de soufflet (PL) respective,
un deuxième capteur (H) étant disposé à l'intérieur ou à l'extérieur de l'amortisseur pneumatique (2, 2a, 2b, 2c, 2d) pour détecter la course de débattement (HL),
le dispositif comprenant un dispositif de calcul électronique (M), lequel est configuré pour obtenir les deux données concernant la pression de soufflet (PL) et la course de débattement (HL),
un diagramme caractéristique de l'amortisseur pneumatique étant enregistré sur le dispositif de calcul électronique (M), lequel décrit la force (L) en fonction de la course de débattement (HL) et de la pression du soufflet (PL),
le dispositif étant configuré pour déterminer, en fonction de la course de débattement (HL) et de la pression intérieure du soufflet (PL), la force (L) transmise à l'aide du diagramme caractéristique de l'amortisseur pneumatique (2, 2a, 2b, 2c, 2d) respectif,
**caractérisé en ce que**
l'unité de détection (1) comprend un capteur de température,
une fonction mathématique étant enregistrée dans le dispositif de calcul électronique (M), laquelle tient compte d'une modification du diagramme caractéristique de l'amortisseur pneumatique (2, 2a, 2b, 2c, 2d) en raison des influences de température.

2. Dispositif selon la revendication 1,
**caractérisé en ce que**
les capteurs (P, H) et le dispositif de calcul électronique (M) forment une unité de détection (1, 1a, 1b, 1c, 1d).

3. Dispositif selon l'une des revendications précédentes,
**caractérisé en ce que**
l'unité de détection (1, 1a, 1b, 1c, 1d) est configurée pour délivrer, en tant que grandeurs de sortie, la force (L) et/ou la course débattement (HL) et/ou la pression intérieure du soufflet (PL) déterminée.

4. Dispositif selon l'une des revendications précédentes,
**caractérisé en ce que**
la pression de soufflet (PL) peut être mesurée par le premier capteur (P) à l'intérieur de l'amortisseur pneumatique (2, 2a, 2b, 2c, 2d).

5. Dispositif selon l'une des revendications précédentes,
**caractérisé en ce que**
la pression de soufflet (PL) peut être mesurée par le premier capteur (P) à l'intérieur d'une conduite d'air comprimé qui alimente l'amortisseur pneumatique (2, 2a, 2b, 2c, 2d) en air comprimé.

6. Dispositif selon l'une des revendications précédentes,
**caractérisé en ce que**
le deuxième capteur (H) destiné à détecter la course de débattement (HL) est réalisé sous la forme d'un capteur angulaire.

7. Dispositif selon l'une des revendications précédentes,
**caractérisé en ce que**
une fonction mathématique est enregistrée dans le dispositif de calcul électronique (M), laquelle tient compte d'une modification du diagramme caractéristique de l'amortisseur pneumatique (2, 2a, 2b, 2c, 2d) en raison d'un allongement et/ou d'un tassement de l'amortisseur pneumatique (2, 2a, 2b, 2c, 2d) dus au vieillissement et/ou à la sollicitation.

8. Amortisseur pneumatique (2, 2a, 2b, 2c, 2d) comprenant un dispositif selon l'une des revendications précédentes.

9. Machine équipée d'un amortisseur pneumatique selon la revendication 8.

10. Véhicule automobile équipé d'au moins un amortisseur pneumatique selon la revendication 8.
